# EUROPEAN PATENT SPECIFICATION

(11) **EP 4 186 666 B1**
(45) Date of publication and mention of the grant of the patent: **22.05.2024**
(21) Application number: 21306661.6
(22) Date of filing: 30.11.2021
(51) Int. Cl.: B27N 1/00, B27N 3/18, B27N 5/00, B29C 45/14, B29C 70/34, B29C 70/46, B29C 70/76, B32B 5/08, B32B 5/26, B29C 43/00, D04H 1/425, D04H 1/435, D04H 1/46

(54) **METHOD FOR MANUFACTURING A TRIM ELEMENT AND ASSOCIATED TRIM ELEMENT**
VERFAHREN ZUR HERSTELLUNG EINES VERKLEIDUNGSELEMENTS UND ZUGEHÖRIGES VERKLEIDUNGSELEMENT
PROCÉDÉ DE FABRICATION D'UN ÉLÉMENT DE GARNITURE ET ÉLÉMENT DE GARNITURE ASSOCIÉ

(43) Date of publication of application: 31.05.2023
(73) Proprietor: Faurecia Intérieur Industrie, 92000 Nanterre (FR)
(72) Inventor: RODILLA GARDO, Jose Antonio, 46020 VALENCIA (ES); DE LA PUENTE-NUNEZ, EUSEBIO, 36900 MARÍN (PONTEVEDRA) (ES)
(74) Representative: Lavoix

(56) References cited:
- EP-A1- 3 594 393
- DE-A1-102007 024 052
- DE-A1-102011 119 567
- US-A1- 2020 061 963

## Description

The present invention relates to a method for manufacturing a trim element of a vehicle and to an associated trim element.

DE 102016106124 A1 describes a method for producing a molded article with a fiber-reinforced carrier comprising synthetic fibers and / or natural fibers and at least one attached plastic part.

The method comprises inserting a fiber-reinforced mat between two tool components and closing the tool components so the mat is pressurized and pressed to produce a fiber-reinforced carrier, wherein simultaneously a plastic is injected through a nozzle through the mat into the cavity.

However, as the plastic is injected through the mat, this technique may require holes previously punched or cut-off from the mat, which results in an additional operation. Furthermore, this would leave a protruding or depression generated by the injection nozzle.

It is an objective of the invention to overcome these disadvantages.

DE 102007024052 A1 discloses manufacturing of a lining part for the interior of motor vehicles and involves coating of a form-stable blank having metal layer by back-injection molding with an injection molding material, and fastening a flexible textile mat at the blank.

For this purpose, the subject of the invention is a method for manufacturing a trim element of a vehicle, comprising the steps of:
- blending of a mixture comprising wood fibres, polyacrylic binder and polyester, preferably PET, fibres;
- needling of the mixture to obtain a mat;
- hot shaping of the mat into a trim part; and
- back-injection of additional elements on the trim part to form the trim element,
the shaping and back-injection steps being performed in the same mould.

Thanks to the back injection technique, there is no need for a preparation step of punching or cutting-off holes in the mat. Further, the needling step allows entangling the fibres, adding moldability and tensile properties for subsequent moulding.

According to other features of the method according to the invention, considered alone or according to any technically possible combination:
- the shaping is done at a temperature between 120°C and 160°C, preferably between 130°C and 140°C;
- the mixture comprises between 55% and 70% of wood fibres, between 15% and 20% of polyacrylic binder and between 12% and 22% of polyester, preferably PET, fibres;
- the method comprises adding a fleece on a side of the mixture before the needling step;
- the fleece is a non-woven PET fleece with a density between 30 and 100 g/m²;
- the mixture comprises between 0,5% and 3% of wax or paraffin or bio-wax, preferably between 1% and 1,5% of paraffin;
- during needling, the mixture being needled has two sides and is needled from both sides;
- during the back-injection step, the trim part fills a moulding cavity of the mould only partly such as to define at least one empty portion, a product being injected directly inside the at least one empty portion; and/or
- during the hot shaping step, the mat undergoes hot press compression moulding.

The invention further relates to a trim element manufactured according to a method of the previous type.

Other aspects and advantages of the invention will appear upon reading the following description, provided as an example, and done in reference to the appended drawings, in which:

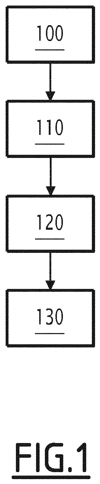

- figure 1 is a schematic bloc diagram of a process according to one embodiment of the invention, and
- figure 2 is a schematic view of a back-injection step of a process according to an embodiment of the invention.

A method for manufacturing a trim element of a vehicle is described hereafter. The method comprises the following steps:
- blending 100 of a mixture;
- needling 110 of the mixture to obtain a mat;
- hot-shaping 120 of the mat into a trim part; and
- back-injection 130 of additional elements on the trim part.

The mixture comprises wood fibres, polyacrylic binder and polyester fibres.

The wood fibres have a length between 3 to 12 mm.

Using wood fibres enables a good air permeability and adhesion properties for subsequent gluing and covering processes with glue on the trim element.

The wood fibres are moreover cheap and available and increase the bio-content.

The polyacrylic binder is, for example, a polyacrylic thermosetting resin. The polyacrylic thermosetting resin is, for example, a low temperature thermosetting resin.

The polyacrylic thermosetting resin, for example, has a temperature of setting comprised between 135°C and 160°C.

When cured, said resin is more resistant to higher temperature.

The polyacrylic binder adds important adhesion and porosity advantages to the mat and allows a higher wood fibre content compared to having only natural fibres and polypropylene fibres.

The polyester fibres are, for example, polyethylene terephthalate (PET) fibres.

The polyester fibres are longer than the wood fibres.

The polyester fibres have a length between 60 and 90 mm.

Using polyester fibres, in particular PET fibres, increase the tensile properties, in particular with a higher tensile strength, and moldability.

The mixture for example comprises:
- between 55% and 70% of wood fibres,
- between 15% and 20% of polyacrylic binder, and
- between 12% and 22% of polyester, more precisely PET, fibres

In a first embodiment, the mixture for example comprises:
- between 55% and 65% of wood fibres,
- between 15% and 18% of polyacrylic binder, and
- between 21% and 22% of polyester, more precisely PET, fibres.

Alternatively, in a second embodiment, the mixture for example comprises:
- between 65% and 70% of wood fibres,
- between 18% and 20% of polyacrylic binder, and
- between 12% and 15% of polyester, more precisely PET, fibres.

The composition of the mixture is, for example, adapted on the shape of the final part to be obtained. In particular, the more the shape of the final part is complex, the more polyester fibres and/or polyacrylic binder is in the mixture.

In one embodiment, the mixture comprises between 0,5% and 3% of wax or paraffin or bio-wax.

In particular, the mixture comprises for example paraffin, for example between 1% and 1,5% of paraffin.

This improves the water-resistance of the wood fibre based material and protect it from moisture.

The components of the mixture are blended until the components are evenly distributed.

The mixture is for example made by an airlay system complemented optionally by a carding system.

In the airlay system, the wood fibres, for example after a defibrator, are transported by means of air into a silo then mixed to polyester fiber thanks to an airlay.

In particular, between the defibrator and the silo, the system comprises a pipe on which a blow line is adapted to add additives to the wood fibers. The wood fibers are transported in the pipe, for example by a dry saturated steam flow.

The polyacrylic binder is, for example, added to the wood fibers before the airlay, for example in said blow line.

If relevant, the wax or paraffin or bio-wax is added to the wood fibres before airlay, for example in said blow line or before the defibrator.

The carding system is adapted to orient the polyester fibers and advantageously distribute said fibres.

Optionally, a fleece, in particular a non-woven PET fleece, is added on a side of the mixture before the needling step 110.

Such a fleece is, for example, adapted for vehicle interior trim components integrating fixing features and/or ribs like door panel carrier, center console carrier or dashboard structural part.

The non-woven PET fleece has a density between 30 and 100 g/m², for example equal to 35 g/m².

Said fleece increases the tensile property and facilitate the transport, in particular to the needling machine as described below.

Alternatively, optionally, the mixture is place on a transport band, in particular a steel mesh conveyor belt, and fed into the needling machine mentioned below.

The mixture is placed in a needling machine.

When applicable, the fleece is located on the bottom side of the mixture, in order to be needled with it.

The needling machine comprises needles.

The needles have for example a harpoon shape.

The needling machine further comprises two plates that extend parallel to each other, opposite one another.

The two plates are spaced apart, the mixture being fed between the two plates, for example with a feeder conveyor.

Each plate is provided with perforations for the passage of the needles through the plate.

The mixture in the needling machine has two sides, more particularly one side extending against each plate.

The mixture is needled or also called needle-punched.

Needle-punching enables mechanically entangling the fibres of the mixture to produce a non-woven fabric by repeated penetration of the needles, in particular in all the width of the mat.

By entangling, needling helps the PET fibers holding the wood fibers.

When applicable, the fleece is needled with the mixture.

In the present embodiment, the mixture is needled from both sides.

Alternatively, the mixture is needle from only one side.

In one embodiment, the process comprises two consecutive needling steps 110 in two different machines between the blending step 100 and the hot-shaping step 120.

This increases the formability and the tensile property of the mat, such that it will be better molded and offer a better resistance to tear.

Thus, needling enable having a higher quality mat.

Further, needling is also advantageous for the back-injection step that will be later described, as it increases homogeneity, with correct density, and limit the material leaking on the other side of the mat compared to the back-injection.

Needling from both sides particularly improve tensile properties of the mat, in particular regarding elongation and force.

The needled mixture forms a mat.

The mat has a thickness between 8 mm and 14 mm.

The mat has a mass per unit area or surface density between 1000 g/m² and 2000 g/m².

These parameters are targeted for improved mechanical properties of the trim element.

The mat is then transferred into a mould having a moulding cavity.

The mould further includes at least one injection nozzle, preferably a plurality of nozzles, for injecting a product inside the moulding cavity.

The mould is movable between an open configuration, wherein the moulding cavity is accessible, and a closed configuration.

The mat is placed more specifically in the moulding cavity while the mould is in the open configuration.

The hot shaping step 120 comprises hot-shaping of the mat into a trim part.

In particular, the mat is hot-shaped in the mould. More precisely, the mat undergoes hot press compression moulding.

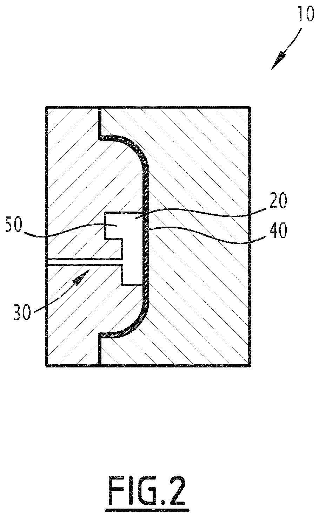

More precisely, the mould 10 is moved in the closed configuration, such that the mat is pressed to produce a trim part 40, as represented in figure 2.

The shaping 120 is done at a temperature between 120°C and 160°C, preferably between 130°C and 150°C, preferably between 130°C and 140°C.

The mould 10 is heated at said temperature during the shaping 120.

After moulding, the trim part has a thickness comprised between 1,4 and 2,4 mm.

The trim part 40 has a volumetric density between 0,85 g/cm³ and 0,95 g/cm³.

The trim part has a mass per unit area or surface density between 1000 g/m² and 2000 g/m².

These parameters are targeted for improved mechanical properties of the trim element.

The trim part fills the moulding cavity 20 only partly.

At least a portion 50 of the moulding cavity 20 is thus empty.

In the represented embodiment, the empty portion(s) 50 has different local thicknesses, for example a first thinner portion for a rib to be injected and a second thicker portion for a retainer or fixing element to be injected.

The injection nozzle(s) 30 is arranged to inject the product inside said portion(s) of the moulding cavity 20.

The back-injection 130 is performed in the same mould 10 as the shaping step 120.

The mould 10 remains in the closed configuration.

A product is injected inside the empty portion(s) 50 of the moulding cavity 20, in particular via the injection nozzle(s) 30.

The product, for example, comprises polymer, for example polyamide or polycarbonate, for example with reinforcements such as glass fibers. The product is for example made of polymer, for example polyamide or polycarbonate, optionally with reinforcements such as glass fibers.

The product, for example, has a softening temperature comprised between 190°C and 210°C.

Additional elements are thus added on the trim part by back-injection to form the trim element.

The additional elements correspond to the back-injected product in the empty portion(s) of the moulding cavity.

Thus, the injected product does not go through the mat as it is directly injected in the empty portion(s) of the moulding cavity.

The injection temperature depends on the product used and its melt flow index.

The back-injected product is injected for example at a temperature higher than 200°C, for example from 210°C to 250°C.

The mould is still substantially at the shaping temperature.

The back-injection starts less than 30 seconds, more precisely less than ten seconds, more precisely between 4 and 8 seconds, after the closing of the mould.

The invention further relates to a trim element manufactured according to the method previously described.

The absence of fibres such as polypropylene fibres enables satisfactory adhesion properties for subsequent gluing and covering processes with conventional glue on the trim element. Moreover, this absence also enables a good air permeability, for example for vacuum covering and premium wrapping of the trim element, for example with leather or fabrics, as well as wood veneering.

The use of one mould for the hot-shaping and the back-injection simplifies the method in terms of needed tools and necessary time on the manufacturing line. This reduces the cost for producing said element.

The components of the mixture, in particular the use of the polyacrylic binder, enable to shape the mat using a mould at a lower temperature than other conventional methods, for example using natural fibre polypropylene for which the shaping step is done following a calibration at 210°C. This further simplifies the method and enables to save energy and time.

## Claims

1. Method for manufacturing a trim element of a vehicle, comprising the steps of:
• blending (100) of a mixture comprising wood fibres, polyacrylic binder and polyester, preferably PET, fibres;
• needling (110) of the mixture to obtain a mat;
• hot shaping (120) of the mat into a trim part (40); and
• back-injection (130) of additional elements on the trim part (40) to form the trim element,
the hot shaping and back-injection steps (120, 130) being performed in the same mould (10).

2. Method according to claim 1, wherein the hot shaping (120) is done at a temperature between 120°C and 160°C, preferably between 130°C and 140°C.

3. Method according to claim 1 or 2, wherein the mixture comprises between 55% and 70% of wood fibres, between 15% and 20% of polyacrylic binder and between 12% and 22% of polyester, preferably PET, fibres.

4. Method according to any of claims 1 to 3, comprising adding a fleece on a side of the mixture before the needling step (110).

5. Method according to claim 4, wherein the fleece is a non-woven PET fleece with a density between 30 and 100 g/m².

6. Method according to any of claims 1 to 5, wherein the mixture comprises between 0,5% and 3% of wax or paraffin or bio-wax, preferably between 1% and 1,5% of paraffin.

7. Method according to any of claims 1 to 6, wherein, during needling (110), the mixture being needled has two sides and is needled from both sides.

8. Method according to any of claims 1 to 7, wherein, during the back-injection step (130), the trim part (40) fills a moulding cavity (20) of the mould (10) only partly such as to define at least one empty portion (50), a product being injected directly inside the at least one empty portion (50).

9. Method according to any of claims 1 to 8, wherein, during the hot shaping step (120), the mat undergoes hot press compression moulding.

10. Trim element manufactured according to the method according to any of claims 1 to 9.

## Patentansprüche

1. Verfahren zum Herstellen eines Verkleidungselements eines Fahrzeugs, umfassend die Schritte:
• Mischen (100) einer Mischung, umfassend Holzfasern, Polyacrylbindemittel und Polyester-, vorzugsweise PET-, Fasern;
• Vernadeln (110) der Mischung, um eine Matte zu erhalten;
• Heißformgeben (120) der Matte zu einem Verkleidungsteil (40); und
• Hinterspritzgießen (130) zusätzlicher Elemente auf dem Verkleidungsteil (40), um das Verkleidungselement zu bilden,
wobei die Heißformgebungs- und Hinterspritzgießschritte (120, 130) in derselben Form (10) durchgeführt werden.

2. Verfahren nach Anspruch 1, wobei das Heißformgeben (120) bei einer Temperatur zwischen 120 °C und 160 °C, vorzugsweise zwischen 130 °C und 140 °C, erfolgt.

3. Verfahren nach Anspruch 1 oder 2, wobei die Mischung zwischen 55 % und 70 % Holzfasern, zwischen 15 % und 20 % Polyacrylbindemittel und zwischen 12 % und 22 % Polyester-, vorzugsweise PET-, Fasern umfasst.

4. Verfahren nach einem der Ansprüche 1 bis 3, umfassend das Hinzufügen eines Vlieses auf einer Seite der Mischung vor dem Vernadelungsschritt (110).

5. Verfahren nach Anspruch 4, wobei das Vlies ein nicht gewebtes PET-Vlies mit einer Dichte zwischen 30 und 100 g/m² ist.

6. Verfahren nach einem der Ansprüche 1 bis 5, wobei die Mischung zwischen 0,5 % und 3 % Wachs oder Paraffin oder Bio-Wachs, vorzugsweise zwischen 1 % und 1,5 % Paraffin, umfasst.

7. Verfahren nach einem der Ansprüche 1 bis 6, wobei während des Vernadelns (110) die zu vernadelnde Mischung zwei Seiten aufweist und von beiden Seiten vernadelt wird.

8. Verfahren nach einem der Ansprüche 1 bis 7, wobei das Verkleidungsteil (40) während des Hinterspritzgießschrittes (130) einen Formhohlraum (20) der Form (10) nur teilweise füllt, sodass mindestens ein leerer Abschnitt (50) definiert ist, wobei ein Produkt direkt in den mindestens einen leeren Abschnitt (50) spritzgegossen wird.

9. Verfahren nach einem der Ansprüche 1 bis 8, wobei während des Heißformgebungschrittes (120) die Matte heißdruckgeformt wird.

10. Verkleidungselement, das nach dem Verfahren nach einem der Ansprüche 1 bis 9 hergestellt wird.

## Revendications

1. - Procédé de fabrication d'un élément de garniture d'un véhicule, comprenant les étapes suivantes :
• le mélange (100) d'un mélange comprenant des fibres de bois, un liant polyacrylique et des fibres de polyester, de préférence PET ;
• l'aiguilletage (110) du mélange pour obtenir un tapis ;
• la mise en forme à chaud (120) du tapis dans une pièce de garniture (40) ; et
• une contre-injection (130) d'éléments additionnels sur la pièce de garniture (40) pour former l'élément de garniture,
les étapes de formage à chaud et d'injection à chaud (120, 130) étant effectuées dans le même moule (10).

2. Procédé selon la revendication 1, dans lequel la mise en forme à chaud (120) est réalisée à une température comprise entre 120 °C et 160 °C, de préférence entre 130 °C et 140 °C.

3. Procédé selon la revendication 1 ou 2, dans lequel le mélange comprend entre 55 % et 70 % de fibres de bois, entre 15 % et 20 % de liant polyacrylique et entre 12 % et 22 % de fibres de polyester, de préférence PET.

4. Procédé selon l'une quelconque des revendications 1 à 3, comprenant l'ajout d'un molleton sur un côté du mélange avant l'étape d'aiguilletage (110).

5. Procédé selon la revendication 4, dans lequel le molleton est un molleton PET non tissé avec une densité comprise entre 30 et 100 g/m².

6. Procédé selon l'une quelconque des revendications 1 à 5, dans lequel le mélange comprend entre 0,5 % et 3 % de cire ou de paraffine ou de bio-cire, de préférence entre 1 % et 1,5 % de paraffine.

7. Procédé selon l'une quelconque des revendications 1 à 6, dans lequel, pendant l'aiguilletage (110), le mélange étant aiguilleté a deux côtés et est aiguilleté des deux côtés.

8. Procédé selon l'une quelconque des revendications 1 à 7, dans lequel, pendant l'étape (130) de rétro-injection, la pièce de garniture (40) remplit une cavité de moulage (20) du moule (10) seulement partiellement de manière à définir au moins une partie vide (50), un produit étant injecté directement à l'intérieur de l'au moins une partie vide (50).

9. Procédé selon l'une quelconque des revendications 1 à 8, dans lequel, lors de l'étape (120) de formage à chaud, le matelas subit un moulage par compression à chaud.

10. Élément de garniture fabriqué selon le procédé selon l'une quelconque des revendications 1 à 9.
